# EUROPEAN PATENT APPLICATION

(11) **EP 4 756 982 A1**
(43) Date of publication of application: **10.06.2026**
(21) Application number: 25775385.5
(22) Date of filing: 21.03.2025
(51) Int. Cl.: H01M 10/42, H01Q 1/22, H01M 50/289, H04W 4/80

(54) **BATTERY PACK**

(30) Priority: 28.03.2024 KR 20240042783; 30.10.2024 KR 20240151433
(71) Applicant: LG Energy Solution, Ltd., Seoul 07335 (KR)
(72) Inventor: HUR, Nam Hoon, Daejeon 34122 (KR); SHIN, Ju Hwan, Daejeon 34122 (KR); HA, Jeong Wan, Daejeon 34122 (KR)
(74) Representative: Plasseraud IP
(86) International application number: PCT/KR2025/003609
(87) International publication number: WO 2025/206648

(57) **Abstract**

Embodiments provide a battery pack. The battery pack includes a pack housing with a base plate and a side wall perpendicular to the base plate, a plurality of battery cell assemblies provided on the base plate and each including a plurality of battery cells and an integrated circuit assembly configured to be electrically connected to the plurality of battery cells, a communication device configured to communicate with an antenna of the integrated circuit assembly of each of the plurality of battery cell assemblies, and a battery management system (BMS) configured to communicate with the communication device.

## Description

### [Technical Field]

The present disclosure relates to a battery pack. The present application claims the benefit of priority based on Korean Patent Application No. 10-2024-0042783, filed on March 28, 2024 and Korean Patent Application No. 10-2024-0151433, filed on October 30, 2024, and the entire contents of the Korean patent applications are incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

### [Disclosure]

### [Technical Problem]

The present disclosure is directed to providing a battery pack with improved energy density.

### [Technical Solution]

Embodiments provide a battery pack. The battery pack includes a pack housing with a base plate and a side wall perpendicular to the base plate, a plurality of battery cell assemblies provided on the base plate and each including a plurality of battery cells and an integrated circuit assembly configured to be electrically connected to the plurality of battery cells, a communication device configured to communicate with an antenna of the integrated circuit assembly of each of the plurality of battery cell assemblies, and a battery management system (BMS) configured to communicate with the communication device.

The communication device may be an antenna module.

The communication device may be configured to wirelessly communicate with the antenna of each of the plurality of battery cell assemblies.

The battery pack may further include wires connected to each of the BMS and the communication device.

The BMS may be configured to communicate with the communication device through the wires.

The wires may be directly connected to each of the BMS and the communication device.

The communication device may be spaced apart from the base plate.

The battery pack may further include a cross-beam between the plurality of battery cell assemblies and the BMS, and the communication device may be spaced apart from the plurality of battery cells with the cross-beam therebetween.

The communication device may be installed on an upper portion of the cross-beam.

Each of the plurality of battery cells may further include side beams spaced apart from each other with the plurality of battery cells therebetween, and the communication device may be installed on the side beam of one of the plurality of battery cells.

The plurality of battery cells of each of the plurality of battery cell assemblies may be arranged in a first direction, and the BMS may be spaced apart from a center of the base plate in a second direction perpendicular to the first direction.

The communication device may be closer to the center of the base plate in the second direction than the BMS.

The side wall may include a base portion and an evasion portion recessed inward from the base portion, and the BMS may overlap the evasion portion in the first direction.

The BMS may be provided in a communication shade of the antenna of each of the plurality of battery cell assemblies.

### [Advantageous Effects]

A battery pack according to embodiments of the present disclosure may include a master battery management system (BMS) and a communication module connected to the master BMS via a wire. The communication module may be adjacent to an upper end of a cross-beam or a side beam and thus communication can be established between the master BMS and a slave BMS even when the master BMS is installed in a communication shade.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a perspective view of a battery pack according to embodiments.
FIG. 2 is a partial perspective view of the battery pack of FIG. 1.
FIG. 3 is a perspective view of a battery pack according to embodiments.
FIG. 4 is a partial perspective view of the battery pack of FIG. 3.
FIG. 5 is a perspective view of a battery pack according to embodiments.
FIG. 6 is a partial perspective view of the battery pack of FIG. 5.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

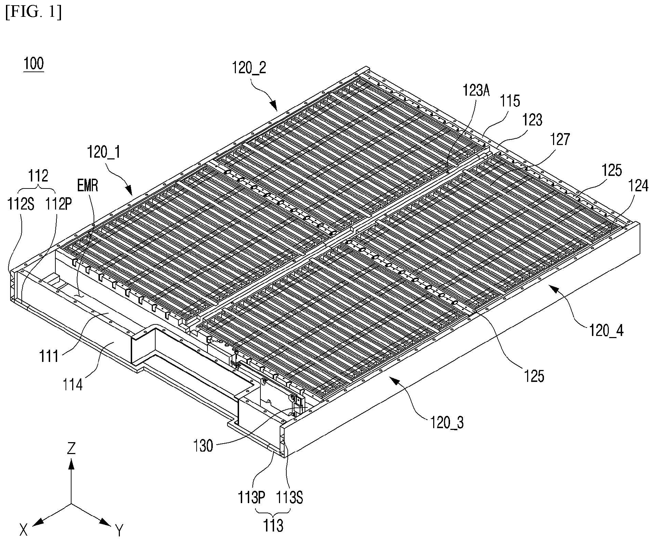

FIG. 1 is a perspective view of a battery pack 100 according to example embodiments.

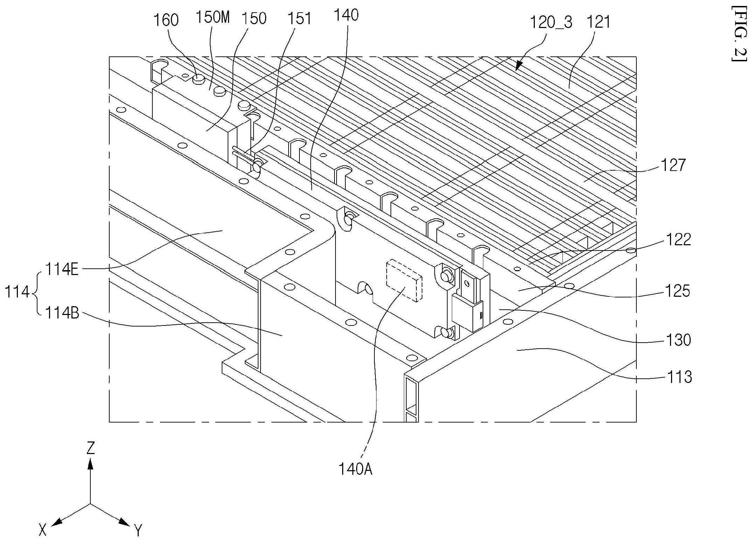

FIG. 2 is a partial perspective view of the battery pack 100 of FIG. 1.

Referring to FIGS. 1 and 2, the battery pack 100 may include a pack housing 110, a plurality of battery cell assemblies 120_1, 120_2, 120_3 and 120_4, cross-beams 130, a battery management system (BMS) 140, a communication device 150, wires 151, and fixing parts 160. The battery pack 100 is a final form of a battery system to be mounted in a mobility or the like.

The pack housing 110 may include a base plate 111 and side walls 112, 113, 114, and 115. Here, two directions substantially parallel to a mounting surface of the base plate 111 are defined as an X-axis direction and a Y-axis direction, and a direction substantially perpendicular to the mounting surface of the base plate 111 is defined as a Z-axis direction. The X-axis direction, the Y-axis direction, and the Z-axis direction may be substantially perpendicular to one another.

The base plate 111 may have a flat plate shape. The side walls 112, 113, 114, and 115 may be on edge portions of the base plate 111. The side walls 112, 113, 114, and 115 may be coupled to the edge portions of the base plate 111.

Each of the base plate 111 and the side walls 112, 113, 114 and 115 may be provided by an extrusion process. The base plate 111 may include a plurality of plates coupled to each other by friction stir welding. The side walls 112 and 113 may be coupled to the base plate 111 by friction stir welding.

The side wall 112 may include a plate portion 112P at the same level as the base plate 111 and a side wall portion 113S perpendicular to the plate portion 112P. The side wall 113 may include a plate portion 113P at the same level as the base plate 111 and a side wall portion 113S perpendicular to the plate portion 113P.

The side walls 114 and 115 may be on the base plate 111. The side walls 114 and 115 may be substantially perpendicular to the base plate 111. Accordingly, the side walls 112, 113, 114, and 115 may horizontally surround the plurality of battery cell assemblies 120_1, 120_2, 120_3, and 120_4.

A plurality of battery cell assemblies 120_1, 120_2, 120_3, and 120_4 may be on the mounting surface of the base plate 111 of the pack housing 110. The base plate 111 may support the plurality of battery cell assemblies 120_1, 120_2, 120_3, and 120_4.

In the present example, the battery cell assemblies 120_1 and 120_2 may be arranged in the X-axis direction, the battery cell assemblies 120_3 and 120_4 may be arranged in the X-axis direction, the battery cell assemblies 120_1 and 120_3 may be arranged in the Y-axis direction, and the battery cell assemblies 120_2 and 120_4 may be arranged in the Y-axis direction. Accordingly, the plurality of battery cell assemblies 120_1, 120_2, 120_3, and 120_4 form a matrix of two rows and two columns but are only an example and should not be understood as limiting the technical idea of the present disclosure in any sense.

Hereinafter, the technical idea of the present disclosure will be described with reference to an embodiment in which the battery pack 100 is of a moduleless type and each of the plurality of battery cell assemblies 120_1, 120_2, 120_3, and 120_4 does not include a module frame. However, the embodiment is a non-limiting example and should not be understood as limiting the technical idea of the present disclosure in any sense. Based on the above description, those of ordinary skill in the art will be able to easily derive a plurality of battery cell assemblies each including a module frame and a module type battery pack including the plurality of battery cell assemblies.

Each of the plurality of battery cell assemblies 120_1, 120_2, 120_3, and 120_4 may include a plurality of battery cells 121, a plurality of pads 122, a first integrated circuit assembly 123, a second integrated circuit assembly 124, side beams 125, and flexible flat cable (FFC) assemblies 127.

The plurality of battery cells 121 may be arranged in the X-axis direction. Each of the plurality of battery cells 121 may include an electrode assembly, positive electrode leads connected to positive electrode tabs of the electrode assembly, negative electrode leads connected to negative electrode tabs of the electrode assembly, an electrolyte, and a case. Each of the plurality of battery cells 121 may be a cylindrical battery cell, a prismatic battery cell, or a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. A jelly roll type electrode assembly is manufactured by winding a positive electrode, a negative electrode, and a separator interposed therebetween. A stack type electrode assembly may include a plurality of positive electrodes and a plurality of negative electrodes that are stacked sequentially, and a plurality of separators interposed therebetween.

According to embodiments, the plurality of battery cells 121 may form a plurality of banks. Each of the plurality of banks may include one or more battery cells 121 connected in parallel. The plurality of banks may be connected to each other in series.

The negative electrode leads of one or more battery cells 121 of each of the plurality of banks may be short-circuited with the positive electrode leads of one or more battery cells 121 of a subsequent bank. The negative electrode leads of the one or more battery cells 121 of each of the plurality of banks may be welded to the positive electrode leads of the one or more battery cells 121 of the subsequent bank.

The positive electrode leads of the one or more battery cells 121 of each of the plurality of banks may be short-circuited with the negative electrode leads of one or more battery cells 121 of a preceding bank. The positive electrode leads of the one or more battery cells 121 of each of the plurality of banks may be welded to the negative electrode leads of the one or more battery cells 121 of the preceding bank.

The number of battery cells 121 included in each of the plurality of banks and the number of banks connected in series to each other may be determined according to a voltage and a current to be output through each of the plurality of battery cell assemblies 120_1, 120_2, 120_3, and 120_4.

The plurality of pads 122 may be interposed between the battery cells 121. One or more banks including battery cells 121 may be interposed between adjacent pads 122 but the present disclosure is not limited thereto. As a non-limiting example, one bank may include three battery cells 121, and six battery cells 121 corresponding to two banks may be interposed between adjacent pads 122.

The plurality of pads 122 may absorb the swelling of the plurality of battery cells 121. The plurality of pads 122 may include polyurethane (PU). According to embodiments, the plurality of pads 122 may include a flame-retardant material such as ceramic and a coated glass material.

The first integrated circuit assembly 123 and the second integrated circuit assembly 124 may be spaced apart from each other in the Y-axis direction with the plurality of battery cells 121 therebetween. The first integrated circuit assembly 123 and the second integrated circuit assembly 124 may be electrically connected to each other via the FFC assemblies 127. Accordingly, a signal indicating measured values of operating parameters (e.g., voltage, current, and/or temperature) of the second integrated circuit assembly 124 may be transmitted to the first integrated circuit assembly 123 through the FFC assemblies 127.

According to embodiments, the first integrated circuit assembly 123 of each of the plurality of battery cell assemblies 120_1, 120_2, 120_3, and 120_4 may be on a central part (e.g., a central part in the Y-axis direction) of the pack housing 110. According to embodiments, the second integrated circuit assembly 124 of each of the plurality of battery cell assemblies 120_1, 120_2, 120_3, and 120_4 may be on an edge part (e.g., an edge part in the Y-axis direction) of the pack housing 110.

According to embodiments, a distance between the first integrated circuit assembly 123 of each of the plurality of battery cell assemblies 120_1, 120_2, 120_3, and 120_4 and a center of the base plate 111 in the Y-axis direction may be less than a distance between the second integrated circuit assembly 124 of each of the plurality of battery cell assemblies 120_1, 120_2, 120_3, and 120_4 and the center of the base plate 111 in the Y-axis direction.

The first integrated circuit assembly 123 may include an antenna 123A. The first integrated circuit assembly 123 may further include an insulating frame, an integrated circuit, bus bars, sensing plates, sensing bars, temperature sensors, wires, and an insulating cover.

The insulating frame may include an insulating material such as plastic. The insulating frame may cover front sides of the plurality of battery cells 121. The insulating frame may support the integrated circuit, the bus bars, the sensing plates, the sensing bars, the temperature sensors, and the wires.

The bus bars may be short-circuited to the positive electrode leads of one or more battery cells 121 of a first bank and the negative electrode leads of one or more battery cells 121 of a last bank. The bus bars may be welded to the positive electrode leads of the one or more battery cells 121 of the first bank and the negative electrode leads of the one or more battery cells 121 of the last bank. Resulting voltages of the plurality of battery cells 121 of each of the plurality of battery cell assemblies 120_1, 120_2, 120_3, and 120_4 may be output through the bus bars. The bus bars may be fixed to the insulating frame.

The integrated circuit may be mounted on the insulating frame. The positive electrode leads and the negative electrode leads that are welded together may form nodes inside the battery cell assembly 120. The integrated circuit may be configured to measure voltages of the nodes.

The sensing bars may include a conductive material. The sensing bars may have a rod shape. The sensing bars may be short-circuited to the bus bars. The sensing bars may be coupled to the bus bars. Voltages of the bus bars may be measured through the sensing bars.

Each of the sensing plates may have a patch shape or a pad shape. The sensing plates may include a conductive material. The sensing plates may be short-circuited to corresponding ones of the positive electrode leads and the negative electrode leads of the plurality of battery cells 121.

Each of the sensing plates may be connected to the integrated circuit. Voltages of a plurality of nodes of each of the plurality of battery cell assemblies 120_1, 120_2, 120_3, and 120_4 may be measured through the sensing plates.

The temperature sensors may be configured to measure temperatures at a plurality of points on the battery cell assembly 120. The temperature sensors may be arranged in the X-axis direction, the Y-axis direction, and the Z-axis direction and thus a temperature distribution in the battery cell assembly 120 may be measured.

The antenna 123A may be configured to communicate with the BMS 140 through the communication device 150. As a non-limiting example, the antenna 123A may use a wireless LAN frequency, e.g., a 2.4 GHz band. A bandwidth of the 2.4 GHz band may be about 80 MHz and include fourteen overlapping channels. About three among the fourteen overlapping channels may be used simultaneously without signal interference. According to embodiments, the BMS 140 may include an antenna module 140A and communicate with the communication device 150 in a wireless manner. According to embodiments, the BMS 140 may communicate with the communication device 150 by wire and/or wirelessly.

The antenna 123A may be mounted on the integrated circuit of the first integrated circuit assembly but embodiments are not limited thereto. The antenna 123A may be configured to transmit a signal indicating measured values of operating parameters (e.g., voltage, current, and/or temperature) of the battery cell assembly 120.

The insulating cover may include an insulating material such as plastic. The insulating cover may be interference-fitted into the insulating frame. The insulating cover may cover the integrated circuit, the bus bars, the sensing plates, the sensing bars, and the temperature sensors and thus electrical elements of the first integrated circuit assembly 123 may be protected.

The second integrated circuit assembly 124 may include an insulating frame, an integrated circuit, sensing plates, temperature sensors, wires, and an insulating cover. The second integrated circuit assembly 124 is substantially the same as the first integrated circuit assembly 123, except that the second integrated circuit assembly 124 does not include an antenna, bus bars and sensing bars.

The side beams 125 may be spaced apart from each other in the X-axis direction with the plurality of battery cells 121 therebetween. Each of the side beams 125 may have roughly a shape of Γ. A height of each of the side beams 125 (i.e., a length thereof in the Z-axis direction) may be greater than a height of each of the plurality of battery cells 121 (i.e., a length thereof in the Z-axis direction). The side beams 125 may be arranged symmetrically. That is, the side beams 125 may face opposite directions.

The cross-beams 130 may extend in the Y-axis direction. The cross-beams 133 may isolate the plurality of battery cell assemblies 120_1, 120_2, 120_3, and 120_4 in the X-axis direction. The cross-beams 130 may be in contact with the base plate 111. The cross-beams 130 may be welded to the base plate 111 but are not limited thereto.

A height of each of the cross-beams 130 (i.e., a length thereof in the Z-axis direction) may be less than a height of the side beams 125 (i.e., a length thereof in the Z-axis direction). Accordingly, the side beams 125 may include a portion overlapping the cross-beams 130 in the Z-axis direction and be fixed to the cross-beams 130 by bolting or the like.

In the X-axis direction, the cross-beams 133 may be interposed between the battery cell assemblies 120_1 and 120_3 and the battery cell assemblies 120_2 and 120_4, between the battery cell assemblies 120_1 and 120_3 and the side wall 114, and between the battery cell assemblies 120_2 and 120_4 and the side wall 115.

The BMS 140 may be disposed in an electronic component mounting region EMR of the pack housing 110. The electronic component mounting region EMR may be a space between the plurality of battery cell assemblies 120_1, 120_2, 120_3 and 120_4 and the side wall 114. The BMS 140 may be interposed between the side wall 114 and a plurality of battery cell assemblies 120_1, 120_2, 120_3 and 120_4.

Hereinafter, the technical idea of the present disclosure will be described with respect to an embodiment in which the BMS 140 is inside the pack housing 110, but the embodiment is only an example and does not limit the technical idea of the present disclosure in any sense. Those of ordinary skill in the art will be able to easily derive an example in which the BMS 140 is outside the pack housing 110, based on the description herein.

The BMS 140 may be configured to monitor, balance, and control the battery pack 100. The monitoring of the battery pack 100 may include monitoring measured values of operating parameters (e.g., voltage, current, and/or temperature) inside the battery pack 100. The BMS 140 may receive signals transmitted from antennas 123A of each of the plurality of battery cell assemblies 120_1, 120_2, 120_3 and 120_4 by relay of the communication device 150. The signals may represent the operating parameters (e.g., voltage, current, and/or temperature).

The balancing of the battery pack 100 is an operation of reducing a deviation among the plurality of battery cell assemblies 120_1, 120_2, 120_3, and 120_4. The controlling of the battery pack 100 includes preventing overcharging, over-discharging, and overcurrent. Through monitoring, balancing, and controlling, the battery pack 100 may be operated under optimal conditions to prevent a decrease in the lifespan of each of the plurality of battery cell assemblies 120_1, 120_2, 120_3, and 120_4.

The communication device 150 may be provided in the electronic component mounting region EMR. According to embodiments, the communication device 150 may be an antenna module. The communication device 150 may be configured to be electrically connected to the BMS 140. The communication device 150 may be connected to the BMS 140 via wire. The communication device 150 may be connected to the BMS 140 via the wires 151. The wires 151 may be connected to the communication device 150 and the BMS 140. The wires 151 may be directly connected to the communication device 150 and the BMS 140.

The BMS 140 may be configured to communicate with the communication device 150. The BMS 140 may be configured to communicate with the communication device 150 via the wires 151. The communication device 150 may be configured to communicate with the BMS 140 via wire. The communication device 150 may be wirelessly connected to the antenna 123A of each of the plurality of battery cell assemblies 120_1, 120_2, 120_3, and 120_4.

The communication device 150 may be configured to relay communication between the BMS 140 and the first integrated circuit assembly 123 of each of the plurality of battery cell assemblies 120_1, 120_2, 120_3, and 120_4. Accordingly, a control signal generated from the BMS 140 may be transmitted to the antenna 123A of each of the plurality of battery cell assemblies 120_1, 120_2, 120_3, and 120_4 through the communication device 150. A signal indicating measured values of operation parameters (e.g., voltage, current, and/or temperature) of each of the plurality of battery cell assemblies 120_1, 120_2, 120_3, and 120_4 collected by the first integrated circuit assembly 123 of each of the plurality of battery cell assemblies 120_1, 120_2, 120_3, and 120_4 may be transmitted from the antenna 123A of each of the plurality of battery cell assemblies 120_1, 120_2, 120_3, and 120_4 to the communication device 150.

In the present example, the side wall 114 may include a base portion 114B and an evasion portion 114E recessed inward from the base portion 114E. The evasion portion 114E may include a portion perpendicular to the X-axis direction and portions perpendicular to the Y-axis direction. When the battery pack 100 is loaded into an application such as a vehicle or the like, a recessed shape of the evasion portion 114E may prevent mechanical interference between the application and the battery pack 100.

A distance between the evasion portion 114E of the side wall 114 and the cross-beam 130 in the X-axis direction may be different from a distance between the base portion 114B of the side wall 114 and the cross-beam 130 in the X-axis direction. The distance between the evasion portion 114E of the side wall 114 and the cross-beam 130 in the X-axis direction may be less than the distance between the base portion 114B of the side wall 114 and the cross-beam 130 in the X-axis direction.

When the BMS 140 is in the evasion portion 114E according to the design of the battery pack 100, the evasion portion 114E, the side beam 125, and the cross-beam 130 are extremely close to one another and thus radio wave transmission between the antennas 123A and the BMS 140 of each of the plurality of battery cell assemblies 120_1, 120_2, 120_3, and 120_4 may be blocked. That is, the BMS 140 may be in a communication shade.

According to embodiments, the communication device 150 may be closer to a center area in the Y-axis direction than the BMS 140. Accordingly, the communication device 150 may be provided in an area in which communication with the antenna 123A of each of the plurality of battery cell assemblies 120_1, 120_2, 120_3, and 120_4 is smooth and the BMS 140 is connected to the communication device 150 through wires 151, and thus, even when the BMS 140 is in a communication shade, a signal between the BMS 140 and the first integrated circuit assembly 123 of each of the plurality of battery cell assemblies 120_1, 120_2, 120_3, and 120_4 may be transmitted through wireless communication.

According to embodiments, the communication device 150 may be installed on the side beam 125 of the battery cell assembly 120_3. The communication device 150 may be installed on an upper portion of the side beam 125. The communication device 150 may be spaced apart from the base plate 111. The upper portion of the side beam 125 may be farther from the base plate 111 than a lower portion of the side beam 125. According to embodiments, the communication device 150 may include a mount 150M that overlaps an upper surface of the side beam 125 in the Z-axis direction. The fixing parts 160 may penetrate the mount 150M and the upper surface of the side beam 125 to fix the communication device 150 to the side beam 125 of the battery cell assembly 120_3.

According to embodiments, the battery pack 100 may include lid coupled to the side walls 112, 113, 114, and 115. The lid may cover elements, such as the battery cell assemblies 120_1, 120_2, 120_3, and 120_4 and electronic components, inside the battery pack 100. The lid may be fixed to the pack housing 110 by a mechanical coupling means such as a bolt.

The lid may include a waveguide. The waveguide may be a portion higher than a base that is a portion of the lid surrounding the waveguide. That is, a distance between the base of the lid and the base plate 111 may be less than a distance between the waveguide of the lid and the base plate 111.

The waveguide may extend in the X-axis direction. The waveguide may overlap the first integrated circuit assembly 123 of each of the plurality of battery cell assemblies 120_1, 120_2, 120_3, and 120_4 in the Z-axis direction. The waveguide may overlap the antenna 123A of each of the plurality of battery cell assemblies 120_1, 120_2, 120_3, and 120_4 in the Z-axis direction. The waveguide may provide a channel for wireless communication between the communication device 150 and the antenna 123A of each of the plurality of battery cell assemblies 120_1, 120_2, 120_3, and 120_4.

A height of the waveguide in the Z-axis direction may be in a range of about 1 mm to about 10 mm. The height of the waveguide may be about 2 mm or more. The height of the waveguide may be about 3 mm or more. The height of the waveguide may be about 4 mm or more. The height of the waveguide may be about 9 mm or less. The height of the waveguide may be about 8 mm or less. The height of the waveguide may be about 7 mm or less. The height of the waveguide may be about 6 mm or less.

A width of the waveguide in the Y-axis direction may be in a range of about 100 mm to about 200 mm. The width of the waveguide may be about 110 mm or more. The width of the waveguide may be about 120 mm or more. The width of the waveguide may be about 130 mm or more. The width of the waveguide may be about 140 mm or more. The width of the waveguide may be about 190 mm or less. The width of the waveguide may be about 180 mm or less. The width of the waveguide may be about 170 mm or less. The width of the waveguide may be about 160 mm or less.

Accordingly, a distance between the communication device 150 and the lid may be different from a distance between the communication device 150 and the base plate 111. Accordingly, the distance between the communication device 150 and the lid may be greater than the distance between the communication device 150 and the base plate 111.

The battery pack 100 may further include exhaust devices. The exhaust devices may be coupled to one of the side walls 112, 113, 114, and 115. The side wall 110S coupled to the exhaust devices may include an exhaust path connected to the exhaust devices. The exhaust devices may be configured to delay thermal propagation by discharging a high-temperature gas from the inside of the battery pack 100 to the outside when at least one of the plurality of battery cell assemblies 120_1, 120_2, 120_3, and 120_4 is in a thermal runaway state.

Here, the thermal runaway state of each of the plurality of battery cell assemblies 120_1, 120_2, 120_3, and 120_4 is a state in which a temperature change of each of the plurality of battery cell assemblies 120_1, 120_2, 120_3, and 120_4 accelerates the temperature change, and is an uncontrollable positive feedback. Temperatures of the plurality of battery cell assemblies 120_1, 120_2, 120_3, and 120_4 that are in the thermal runaway state sharply increase, and a large amount of a high-pressure gas and combustion debris are discharged.

The battery pack 100 may further include additional electronic components. The additional electronic components may be on the pack housing 110. The additional electronic components may be on the electronic component mounting region EMR. The additional electronic components may be interposed between the side walls 110S on which exhaust devices are installed and the plurality of battery cell assemblies 120_1, 120_2, 120_3, and 120_4.

The additional electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120_1, 120_2, 120_3, and 120_4. The PRA may be configured to supply or cut off power from a high-voltage battery to an external load (e.g., a motor of a vehicle). The PRA may cut off power to an external load (e.g., a motor of a vehicle) to protect the plurality of battery cell assemblies 120_1, 120_2, 120_3, and 120_4 and the external load, when an abnormal voltage such as a voltage surge occurs.

### (Second embodiment)

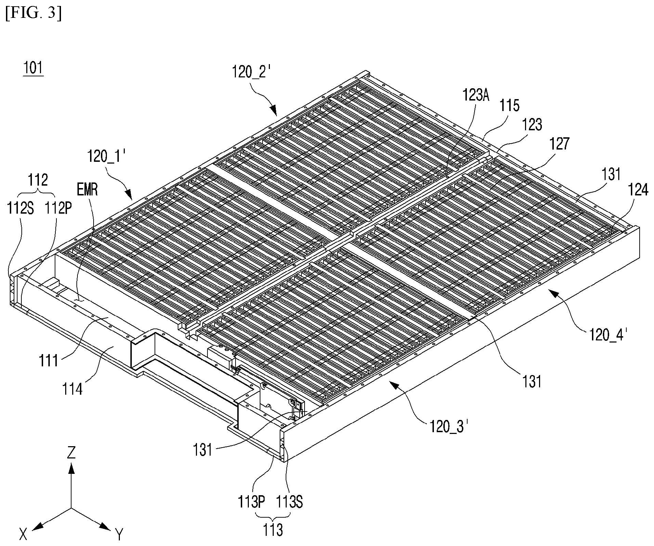

FIG. 3 is a perspective view of a battery pack 101 according to embodiments.

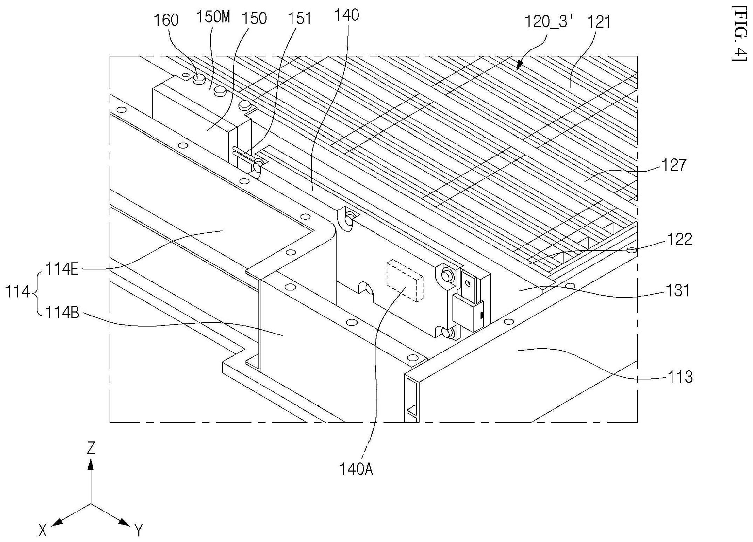

FIG. 4 is a partial perspective view of the battery pack 101 of FIG. 3.

Referring to FIGS. 3 and 4, the battery pack 101 may include a pack housing 110, a plurality of battery cell assemblies 120_1', 120_2', 120_3' and 120_4', cross-beams 131, a BMS 140, a communication device 150, wires 151, and fixing parts 160. The battery pack 100 is a final form of a battery system to be mounted in a mobility or the like.

In the present example, each of the plurality of battery cell assemblies 120_1', 120_2', 120_3' and 120_4' may be substantially the same as the plurality of battery cell assemblies 120_1', 120_2', 120_3' and 120_4' of FIGS. 1 and 2, except that the battery cell assemblies 120_1', 120_2', 120_3' and 120_4' does not include the side beams 125 (see FIG. 2).

The communication device 150 may be installed on an upper portion of the cross-beam 131. The upper portion of the cross-beam 131 may be farther from a base plate 111 than a lower portion of the cross-beam 131. A mount 150M of the communication device 150 may overlap a cross-beam 131 closest to the side wall 114 among the cross-beams 131 in the Z-axis direction. Accordingly, the communication device 150 may be fixed to the cross-beam 131 via the fixing parts 160 that penetrate the mount 150M of the communication device 150 and the cross-beam 131.

### (Third Embodiment)

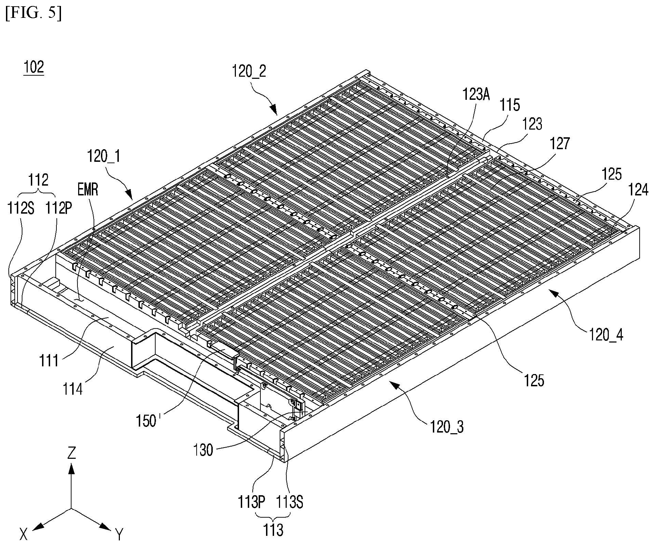

FIG. 5 is a perspective view of a battery pack 102 according to embodiments.

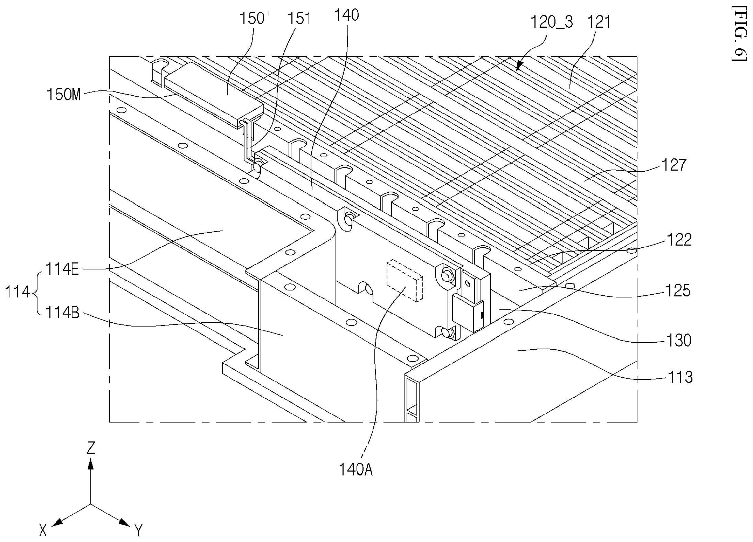

FIG. 6 is a partial perspective view of the battery pack 102 of FIG. 5.

Referring to FIGS. 5 and 6, the battery pack 102 includes a pack housing 110, a plurality of battery cell assemblies 120_1, 120_2, 120_3, and 120_4, cross-beams 130, a BMS 140, a communication device 150', wires 151, and fixing parts 160 (see FIG. 2). The battery pack 100 is a final form of a battery system to be mounted in a mobility or the like.

The pack housing 110, the battery cell assemblies 120_1, 120_2, 120_3, 120_4, the cross-beams 130, the BMS 140, the wires 151, and the fixing parts 160 (see FIG. 2) are substantially the same as those described above with reference to FIGS. 1 and 2 and thus redundant description thereof is omitted here.

The communication device 150' may include a mount 150M. The mount 150M may be fastened to a side beam 125 of the battery cell assemblies 120_3 via the fixing parts 160 (see FIG. 2).

The communication device 150' may be further spaced apart from a base plate 111 than the plurality of battery cell assemblies 120_1, 120_2, 120_3, and 120_4. A distance between the communication device 150' and the base plate 111 may be greater than a distance between the base plate 111 and upper portions of the side beams 125 of the plurality of battery cell assemblies 120_1, 120_2, 120_3, and 120_4.

A distance between the base plate 111 and a point on the communication device 150' farthest from the base plate 111 may be different from a distance between the base plate 111 and points on the side beams 126 of the plurality of battery cell assemblies 120_1, 120_2, 120_3, and 120_4 farthest from the base plate 111.

The distance between the base plate 111 and the point on the communication device 150' farthest from the base plate 111 may be greater than the distance between the base plate 111 and the points on the side beams 126 of the plurality of battery cell assemblies 120_1, 120_2, 120_3, and 120_4 farthest from the base plate 111.

The communication device 150' may on the side beam 125 of the battery cell assemblies 120_3. In the Z-axis direction, the side beam 125 may include a portion between the communication device 150' and the base plate 111.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery pack comprising:
a pack housing with a base plate and a side wall perpendicular to the base plate;
a plurality of battery cell assemblies provided on the base plate and each including a plurality of battery cells and an integrated circuit assembly configured to be electrically connected to the plurality of battery cells;
a communication device configured to communicate with an antenna of the integrated circuit assembly of each of the plurality of battery cell assemblies; and
a battery management system (BMS) configured to communicate with the communication device.

2. The battery pack of claim 1, wherein the communication device is an antenna module.

3. The battery pack of claim 1, wherein the communication device is configured to wirelessly communicate with the antenna of each of the plurality of battery cell assemblies.

4. The battery pack of claim 1, further comprising wires connected to each of the BMS and the communication device.

5. The battery pack of claim 4, wherein the wires are directly connected to each of the BMS and the communication device.

6. The battery pack of claim 4, wherein the BMS is configured to communicate with the communication device through the wires.

7. The battery pack of claim 1, wherein the communication device is spaced apart from the base plate.

8. The battery pack of claim 1, further comprising a cross-beam between the plurality of battery cell assemblies and the BMS, and
wherein the communication device is spaced apart from the plurality of battery cells with the cross-beam therebetween.

9. The battery pack of claim 8, wherein the communication device is installed on an upper portion of the cross-beam.

10. The battery pack of claim 1, wherein each of the plurality of battery cells further includes side beams spaced apart from each other with the plurality of battery cells therebetween, and
the communication device is installed on the side beam of one of the plurality of battery cells.

11. The battery pack of claim 1, wherein the plurality of battery cells of each of the plurality of battery cell assemblies are arranged in a first direction, and
the BMS is spaced apart from a center of the base plate in a second direction perpendicular to the first direction.

12. The battery pack of claim 11, wherein the communication device is closer to the center of the base plate in the second direction than the BMS.

13. The battery pack of claim 11, wherein the side wall includes a base portion and an evasion portion recessed inward from the base portion, and
the BMS overlaps the evasion portion in the first direction.

14. The battery pack of claim 1, wherein the BMS is provided in a communication shade of the antenna of each of the plurality of battery cell assemblies.
